# EUROPEAN PATENT SPECIFICATION

(11) **EP 3 599 824 B1**
(45) Date of publication and mention of the grant of the patent: **13.01.2021**
(21) Application number: 18702692.7
(22) Date of filing: 01.02.2018
(51) Int. Cl.: A01G 25/16, H04B 3/54

(54) **IRRIGATION CONTROLLER**
BEWÄSSERUNGSSTEUERUNG
CONTROLLEUR D'IRRIGATION

(30) Priority: 24.03.2017 DE 102017002838
(43) Date of publication of application: 05.02.2020
(73) Proprietor: Husqvarna AB, 561 82 Huskvarna (SE)
(72) Inventor: KIENZLE, Christian, 89584 Ehingen (DE); SCHABEL, Thomas, 88483 Burgrieden (DE)
(74) Representative: Finkele, Rolf
(86) International application number: PCT/EP2018/052525
(87) International publication number: WO 2018/171965

(56) References cited:
- US-A- 5 839 658
- US-A1- 2003 006 882
- US-B2- 9 439 369

## Description

### TECHNICAL FIELD

The present disclosure relates to an irrigation controller, and more particularly to the irrigation controller for determining a connection status of a valve.

### BACKGROUND

Irrigation controller is a device used to control one or more valves which control the flow of water to sprinkler heads and driplines in an irrigation system. A typical valve controls the flow of water to a specific area of a landscape. Such specific areas are commonly referred to as irrigation zones. The control of water applied to each irrigation zone allows for more efficient use of the available water supply by providing a manner whereby differential amounts of water may be applied according to the particular needs of dissimilar areas of the landscape.

Irrigation controllers for automatic irrigation systems typically allow a user to program one or more parameters associated with the irrigation system. For example, an irrigation controller may allow a user to configure individual start times for particular irrigation cycles and sprinklers. Calendar programs could provide the ability to select particular days for irrigation. Unfortunately, such irrigation controllers quickly become undesirably complex with increased numbers of irrigation zones, options for repeating irrigation cycles, menu for irrigation time selection and the like.

As the irrigation controller typically has several output ports across which the valves may be connected, a menu for implementing the irrigation scheme tends to become complex. Moreover, the user needs to go through all the output ports displayed on a user interface even if only some of the output ports are actually used to connect the valves. Further, the user interface may also provide options to configure the operation of a valve which is disconnected due to a fault in the cable coupling the valve with the irrigation controller, thus wasting time of the user
US 9 439 369 B2, US 2003/006882 A1 and US 5839 658 A illustrate examples of irrigation controllers in the prior art.

### SUMMARY

In view of the above, it is an objective of the present invention to solve or at least reduce the drawbacks discussed above. The objective is at least partially achieved by an irrigation controller configured to determine a connection status of at least one valve in an irrigation system, according to an embodiment of the present invention. The irrigation controller comprises a first valve port electrically coupled with the at least one valve. The irrigation controller comprises a second valve port electrically coupled with the at least one valve. The irrigation controller comprises a switch electrically coupled with at least one of the first valve port and the second valve port, the switch is configured to selectively connect the at least one valve to a power supply via the at least one of the first valve port and the second valve port. The irrigation controller further comprises at least one transmitter electrically coupled to the first valve port, wherein the at least one transmitter is configured to transmit a detection signal to the at least one valve. The irrigation controller also comprises at least one receiver electrically coupled to the second valve port, wherein the at least one receiver is configured to receive the detection signal from the at least one valve. This communication between the first and second valve port is possible by the fact that each ordinary valve inherently comprises an impedance linking the two ports. The irrigation controller further comprises a processor electrically coupled with the at least one transmitter and the at least one receiver. The processor is configured to control the switch to selectively connect the at least one valve to the power supply. The processor is further configured to determine the connection status of the at least one valve based on whether the detection signal is received by the at least one receiver. The determined connection status helps in configuring a user interface of the irrigation controller such that it does not display the output ports across which there are no valves.

According to an embodiment of the present invention, the detection signal is a low voltage signal as compared to a voltage of the power supply. Use of the low voltage detection signal helps in preventing interference from the power supply.

According to an embodiment of the present invention, the detection signal is a high frequency signal as compared to a frequency of the power supply. Use of the high frequency detection signal helps in preventing interference from the power supply.

According to an embodiment of the present invention, the connection status of the at least one valve is either connected or disconnected. The connection status helps in identifying the disconnected valves and accordingly adjusting a user interface of the irrigation controller.

According to an embodiment of the present invention, the processor of the irrigation controller is configured to determine the connection status as connected when the detection signal is received by the receiver. Reception of the detection signal at the receiver indicates that the valve is connected across the irrigation controller.

According to an embodiment of the present invention, the processor of the irrigation controller is configured to control the switch such that the power supply is connected to the valve when the connection status of the valve is connected. Thus, the valve is switched on only if the connection status of the valve is connected.

According to an embodiment of the present invention, processor of the irrigation controller is configured to determine the connection status as disconnected when the detection signal is not received by the receiver. Thus, if the detection signal is not received at the receiver, then it is understood that either the valve is not connected / not connected properly or there may be a fault in the valve or in the control wires connecting the irrigation controller with the valve.

According to an embodiment of the present invention, the processor of the irrigation controller is configured to control the switch such that the power supply is not connected to the valve when the connection status of the valve is disconnected. The irrigation controller thus does not allow switching of the disconnected valves.

According to an embodiment of the present invention, a first high pass filter is provided between the at least one transmitter and the power supply. The first high pass filter helps in protecting the transmitter from the power supply signals.

According to an embodiment of the present invention, a second high pass filter is provided between the at least one receiver and the power supply. The second high pass filter helps in protecting the receiver from the power supply signals.

According to an embodiment of the present invention, the number of receivers in the irrigation controller is equal to the number of valves such that each of the at least one valve is coupled with a dedicated receiver to determine the connection status of the at least one valve. Thus, the irrigation controller can simultaneously determine the connection status of all the valves.

According to an embodiment of the present invention, the irrigation controller comprises a user interface to allow a user to program the irrigation controller. The user interface is configured to receive user inputs and accordingly program the irrigation controller.

According to an embodiment of the present invention, the user interface displays information about only those valves which have the connection status as connected. This greatly improves the user experience as the information about the disconnected valves is not shown on the user interface.

According to an embodiment of the present invention, the irrigation controller comprises a memory to store an irrigation control program and irrigation control parameters, the irrigation control program configured to control at least in part the turning on and off of the switch. The irrigation control program allows a user to set a desired irrigation cycle, starting time and duration, and various other parameters.

According to an embodiment of the present invention, the switch is an AC-switch, such as a triac or a relais or a IGBT or a thyristor.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates an irrigation system, in accordance with an embodiment of the present invention;
**FIG. 2** illustrates a schematic view of an irrigation controller, in accordance with an embodiment of the present invention; and
**FIG. 3** shows a display of the irrigation controller, in accordance with an embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

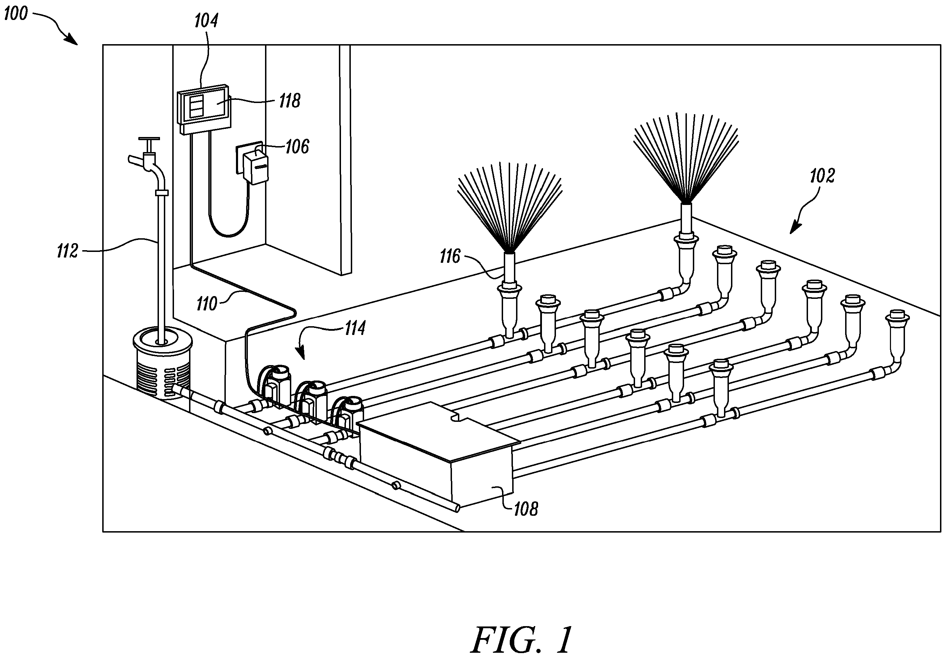

**FIG. 1** shows an irrigation system **100,** according to an embodiment of the present invention. The irrigation system **100** may be an automatic irrigation system used in an irrigation zone **102.** The irrigation zone **102** may be part of a single landscape or separate landscapes. The landscapes may be a garden, golf course, lawn, agricultural or horticultural field, or the like. The irrigation zone **102** may also include potted plants. The irrigation system **100** may be used for indoor as well as outdoor locations. The irrigation system **100** includes an irrigation controller **104** configured to control one or more components, devices, ports, interfaces, and/or assemblies associated with the irrigation system **100.**

The irrigation controller **104** is connected to a power supply **106.** In one embodiment, the power supply **106** is a 24 volts 50 Hz AC power supply that supplies power to the irrigation controller **104.** The power supply **106** may also supply power to run various components of the irrigation controller **104** such as microprocessor, memory, analog amplifiers, system clock and LED display.

The irrigation controller **104** is coupled to a valve box **108** using one or more control wires **110.** The control wires **110** may include extended cables. The valve box **108** is connected to an irrigation fluid supply **112.** The valve box **108** comprises one or more valves **114** configured to provide water, or any other irrigating fluid (e.g., water mixed with an additive) from the irrigation fluid supply **112** to one or more irrigation devices **116.** The irrigation device **116** may be a pop-up sprinkler. It is noted that in some embodiments implemented in the irrigation system **100,** one valve **114** is shown as coupled to one irrigation device **116;** however, that in other embodiments, one valve **114** may be coupled to multiple irrigation devices **116.** It is further noted that the irrigation device **116** may be any rotor device, stationary device, drip device, etc.

The irrigation controller **104** may be programmable by a user. One or more user inputs may be provided for controlling operation of the irrigation controller **104.** The irrigation controller **104** may be provided with a user interface **118** to allow the user to program the irrigation controller **104.** Further, the user interface **118** may include a physical keypad, a touchscreen, one or more buttons and knobs, and a display to aid the user in controlling the various parameters associated with the irrigation controller **104.** In various embodiments, the irrigation controller **104** may be accessed by a remote device. For example, the user interface **118** of the irrigation controller **104** may be displayed on a smartphone of a user allowing the user to remotely program the irrigation controller **104.** Alternative or in addition to the smartphone a user might also want to use a tablet, a PC, a laptop or the like.

The irrigation controller **104** may control the opening and closing of the valves **114** based on an irrigation control program. The irrigation controller **104** may include a memory (not shown) to store the irrigation control program and associated control parameters. The irrigation control program may be configured to control the switching ON and OFF of the valves **114.** For example, the irrigation control program may be configured to switch ON one or more valves **114** on every alternate day, every 3^{rd} day, during a fixed time slot, or fixed weekdays such as every Tuesday and Saturday.

The irrigation controller **104** is further configured to determine a connection status of the valves **114.** The connection status of the valves **114** may be either connected or disconnected. Thus, valves **114** having the connection status as disconnected are known to the irrigation controller **104** beforehand and hence are not switched ON. The connection status of the valves **114** may be used to accordingly adjust the user interface of the irrigation controller **104.** For example, the user interface may be configured to display information about only those valves **114** which have the connection status as connected.

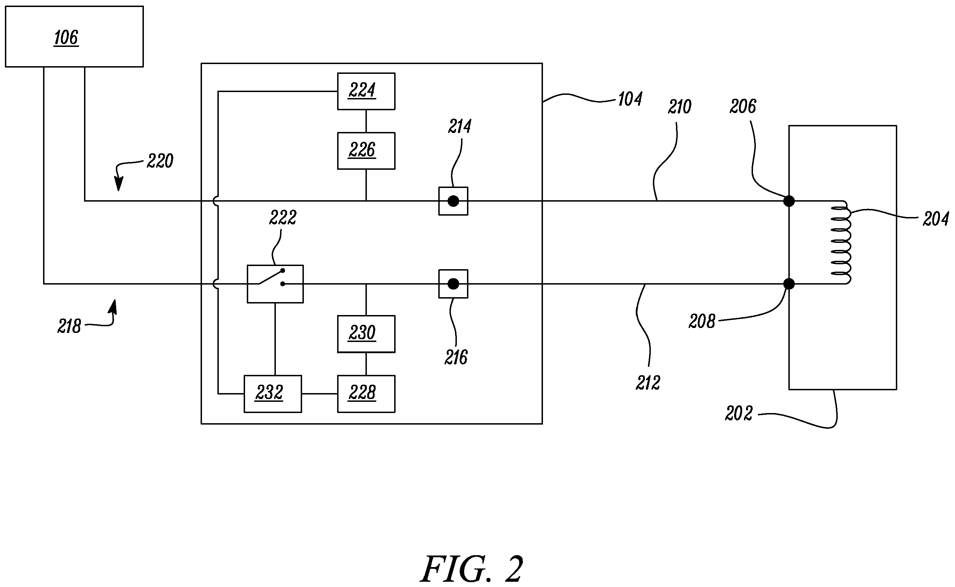

FIG. 2 is a schematic illustration of the irrigation controller **104** in accordance with one embodiment of the invention. The irrigation controller **104** is connected to a valve **202.** The inherent impedance of the valve **202** is illustrated here with coil **204.** As shown in FIG. 2, a first terminal **206** and a second terminal **208** of the valve **202** is connected with the irrigation controller **104** via a common wire **210** and a power wire **212** respectively. A power signal, e.g., 24 volts AC, from the irrigation controller **104** is sent on the power wire **212** to the valve **202** while the common wire **210** provides a return path to complete the circuit. The irrigation controller **104** includes a first valve port **214** and a second valve port **216** for connecting the valve **202** with the irrigation controller **104.** Referring to FIG. 2, the first valve port **214** is electrically coupled to the first terminal **206** of the valve **202** via the common wire **210.** Similarly, the second valve port **216** is electrically coupled with the second terminal **208** of the valve **202** via the power wire **212.**

The irrigation controller **104** is electrically coupled to the power supply **106** having a power side **218** and a common side **220.** In one embodiment, the power supply **106** is a 24 volts 50 Hz AC power supply that supplies power to the irrigation controller **104.** As shown in FIG. 2, the common side **220** of the power supply **106** is electrically coupled with the valve port 214. The irrigation controller **104** includes a switch **222** to control the turning ON and OFF of the valve **202.** The valve port **216** is connected with the power side **218** of the power supply **106** via the switch **222.** A person of ordinary skill in the art will understand that the switch **222** may be disposed on the common side **220.** In one embodiment, the switch **222** is an AC-switch, such as a triac or a relais or a IGBT or a thyristor.

The irrigation controller **104** includes a transmitter **224** configured to transmit a detection signal. In one embodiment, the detection signal is a low voltage signal as compared to voltage of the power supply **106.** For example, the detection signal may be a 2 volts signal. In another embodiment, the detection signal is a high frequency signal as compared to the frequency of the power supply **106.** For example, the detection signal may be a 1 MHz signal. Using a different voltage and a different frequency compared to those of the power supply 106 results in less interference between the detection signal and power signals. A person of ordinary skill in the art will understand that the detection signal described above is merely for exemplary purposes and the detection signal may have different shape, magnitude, frequency and other signal characteristics. The transmitter **224** is configured to transmit the detection signal to the valve **202.** The transmitter **224** may be provided with a first high pass filter **226** to protect the transmitter **224** from the power supply **106.**

The irrigation controller **104** includes a receiver **228** configured to receive the detection signal. The receiver **228** may be provided with a second high pass filter **230** to protect the receiver **228** from the power supply **106.** The irrigation controller **104** includes a processor **232** configured to control the switch **222.** The processor **232** is electrically coupled to the transmitter **224** and the receiver **228.** As shown in FIG. 2, the transmitter **224,** the valve **202,** and the receiver **228** form an electrical circuit. Thus, when the valve **202** is connected, the detection signal transmitted from the transmitter **224** is received by the receiver **228.** In case the valve **202** is disconnected or not connected properly or if there is a fault in the connection wires, the receiver **228** does not receive the detection signal transmitted by the transmitter **224.** In one embodiment, the irrigation controller **104** may be configured to compare the detection signal received at the receiver **228** with a predetermined detection signal. The irrigation controller **104** may determine the connection status of the valve **202** based on a result of the comparison. Thus, the irrigation controller **104** is configured to determine the connection status of the valve **202** based on whether the detection signal is received by the receiver **228** or not.

The irrigation controller **104** may be configured to control the switch **222** based on the connection status of the valve **202.** In one embodiment, the irrigation controller **104** may be configured to control the switch **222** such that the power supply **106** is connected to the valve **202** when the connection status of the valve is connected. In another embodiment, the irrigation controller **104** may be configured to control the switch **222** such that the power supply **106** is not connected to the valve **202** when the connection status of the valve is disconnected.

The irrigation controller **104** may be implemented using one or more of processor **232,** a microprocessor, a microcontroller, a digital signal processor (DSP), a field-programmable gate array (FPGA), or any other suitable means for electronically controlling functionality of the irrigation system **100.** The irrigation controller **104** may be configured to operate according to a predetermined algorithm or set of instructions for operating the irrigation system **100.** Such an algorithm or set of instructions may be preprogrammed or incorporated into a memory that is accessible to and/or disposed within the irrigation controller **104** as is commonly known in the art.

Although various embodiments of the invention are described using the irrigation system **100** having one valve **202,** a person of ordinary skill in the art will understand that various aspects of the invention are equally applicable to the irrigation systems **100** having a plurality of valves **202.** In case of multiple valves **202,** the irrigation controller **104** may be configured to employ a plurality of transmitters **224** and a plurality of receivers **228** to determine the connection status of the valves **202.** Several different configurations of the plurality of transmitters **224** and the plurality of receivers **228** may be used. For example, in an irrigation system comprising six valves, the irrigation controller **104** may have one common transmitter **224** and six dedicated receivers **228** to determine the connection status of the six valves **202.** Thus, the transmitter **218** may be configured to transmit the detection signal to each of the six valves **202** and each of the six receivers **220** may be configured to separately receive the detection signal from the corresponding valves **202.**

In another configuration, one transmitter **218** and one receiver **220** may be configured to sequentially determine the connection status of the plurality of the valves **202.** Thus, the transmitter **218** and the receiver **220** are sequentially connected with each of the valves **202** to determine the connection status.

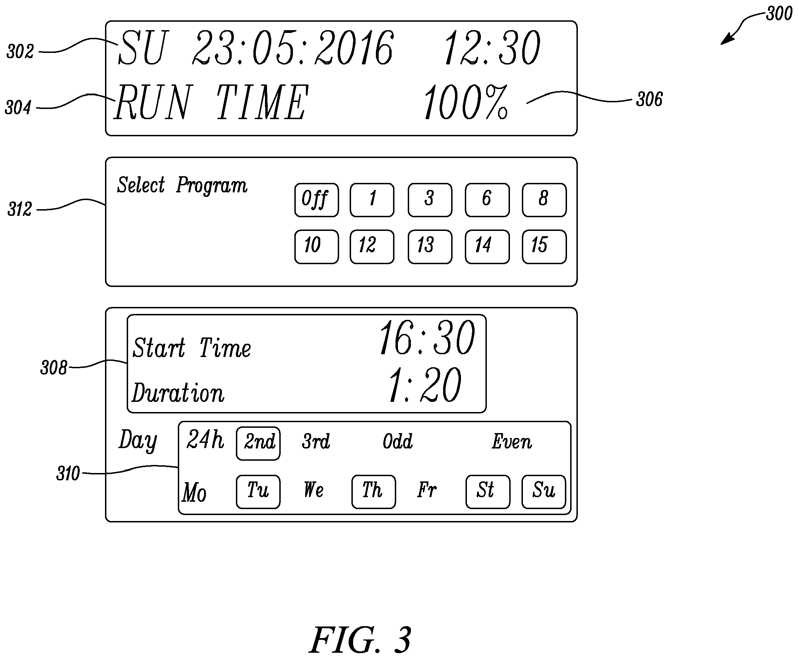

FIG. 3 is a view of a display **300** of the user interface **118** of the irrigation controller **104** in one embodiment of the present invention. The display **300** includes a date and time display **302.** The date and time display **302** displays current day of the week, current date and current time. A status display **304** displays whether the irrigation controller **104** is in a programming mode or a run time mode. An irrigation level display **306** displays the current irrigation level set between 0 to 100 % for all the channels.

The display **300** further includes an irrigation timing display **308** configured to display a start time and a duration of irrigation. An irrigation cycle display **310** is configured to display the irrigation cycle. The irrigation cycle may be 24 hours every day, every 2^{nd} day, every 3^{rd} day, every odd day, every even day, or one or more selected days of week.

As shown in FIG. 3, an output port display **310** is configured to display one or more output ports of the irrigation controller **102** for programming. The irrigation controller **104** is configured to adjust the output port display **310** based on the connection status of the valves **202.** In one embodiment, the output port display **310** is configured to display only the output ports having one or more connected valves **202.** The output ports across which the valves **202** are not connected or not properly connected may not be shown on the output port display **310.** This improves the user experience greatly as the user does not have to go through all the disconnected valves.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- 100: Irrigation System
- 102: Irrigation Zone
- 104: Irrigation Controller
- 106: Power Supply
- 108: Valve Box
- 110: Control Wires
- 112: Irrigation Fluid Supply
- 114: Valves
- 116: Irrigation Device
- 118: User Interface
- 202: Valve
- 204: Coil
- 206: First Terminal
- 208: Second Terminal
- 210: Common Wire
- 212: Power Wire
- 214: First Output Port
- 216: Second Output Port
- 218: Power Side
- 220: Common Side
- 222: Switch
- 224: Transmitter
- 226: First High Pass Filter
- 228: Receiver
- 230: Second High Pass Filter
- 300: Display
- 302: Date and time display
- 304: Status display
- 306: Irrigation level display
- 308: Irrigation Timing Display
- 310: Irrigation Cycle Display
- 312: Output Port Display

## Claims

1. An irrigation controller **(104)** for determining a connection status of at least one valve **(114)** in an irrigation system **(100),** the irrigation controller **(104)** comprising:
a first valve port **(214)** electrically coupled with the at least one valve **(114);**
a second valve port **(216)** electrically coupled with the at least one valve **(114);**
a switch **(222)** electrically coupled with at least one of the first valve port **(214)** and the second valve port **(216),** the switch **(222)** configured to selectively connect the at least one valve **(114)** to a power supply **(106)** via the at least one of the first valve port **(214)** and the second valve port **(216);** and
a processor **(232)** configured to control the switch **(222)** to selectively connect the at least one valve **(114)** to the power supply **(106);**
**characterized in that**:
the irrigation controller **(104)** further comprises:
at least one transmitter **(224)** electrically coupled with the first valve port **(214),** wherein the at least one transmitter **(224)** is configured to transmit a detection signal to the at least one valve **(114);** and
at least one receiver **(228)** electrically coupled with the second valve port **(216),** wherein the at least one receiver **(228)** is configured to receive the detection signal from the at least one valve **(114);** and
the processor **(232)** electrically coupled with the at least one transmitter **(224)** and the at least one receiver **(228),** the processor **(232)** is further configured to:
determine the connection status of the at least one valve **(114)** based on whether the detection signal is received by the at least one receiver **(228).**

2. The irrigation controller **(104)** of claim 1, wherein the detection signal is a low voltage signal as compared to a voltage rating of the power supply **(106).**

3. The irrigation controller **(104)** of claim 1-2, wherein the detection signal is a high frequency signal as compared to a frequency rating of the power supply **(106).**

4. The irrigation controller **(104)** of claim 1-3, wherein the connection status of the at least one valve **(114)** is either connected or disconnected.

5. The irrigation controller **(104)** of claim 4, wherein the processor **(232)** is configured to determine the connection status as connected when the detection signal is received by the receiver **(228).**

6. The irrigation controller **(104)** of claim 5, wherein the processor **(232)** is configured to control the switch **(222)** such that the power supply **(106)** is connected to the at least one valve **(114)** when the connection status of the at least one valve **(114)** is connected.

7. The irrigation controller **(104)** of claim 4, wherein the processor **(232)** is configured to determine the connection status as disconnected when the detection signal is not received by the receiver **(228).**

8. The irrigation controller **(104)** of claim 7, wherein the processor **(232)** is configured to control the switch **(222)** such that the power supply **(106)** is not connected to the at least one valve **(114)** when the connection status of the at least one valve **(114)** is disconnected.

9. The irrigation controller **(104)** of claim 1-8, further comprising a first high pass filter **(226)** between the at least one transmitter **(224)** and the power supply **(106).**

10. The irrigation controller **(104)** of claim 1-9, further comprising a second high pass filter **(230)** between the at least one receiver **(228)** and the power supply **(106).**

11. The irrigation controller **(104)** of claim 1-10, wherein the number of receivers **(228)** in the irrigation controller **(104)** is equal to the number of valves **(114)** such that each of the at least one valve **(114)** is coupled with a dedicated receiver **(228)** to determine the connection status of the at least one valve **(114).**

12. The irrigation controller **(104)** of claim 1-11, further comprising a user interface **(118)** to allow a user to program the irrigation controller **(104).**

13. The irrigation controller **(104)** of claim 12, wherein the user interface **(118)** displays information about only those valves **(114)** which have the connection status as connected.

14. The irrigation controller **(104)** of claim 1-13, further comprising a memory to store an irrigation control program and irrigation control parameters, the irrigation control program configured to control at least in part the turning on and off of the switch **(222).**

15. The irrigation controller **(104)** of claim 1-14, wherein the switch **(222)** is an AC-switch, such as a triac or a relais or a IGBT or a thyristor.

## Patentansprüche

1. Bewässerungssteuerung (104) zum Bestimmen eines Verbindungsstatus von mindestens einem Ventil (114) in einem Bewässerungssystem (100), wobei die Bewässerungssteuerung (104) umfasst:
einen ersten Ventilanschluss (214), der elektrisch mit dem mindestens einen Ventil (114) verbunden ist;
einen zweiten Ventilanschluss (216), der elektrisch mit dem mindestens einen Ventil (114) verbunden ist;
einen Schalter (222), der elektrisch mit mindestens einem ersten Ventilanschluss (214) und dem zweiten Ventilanschluss (216) verbunden ist, wobei der Schalter (222) so ausgelegt ist, dass er selektiv das mindestens eine Ventil (114) über den mindestens einen ersten Ventilanschluss (214) und den zweiten Ventilanschluss (216) mit einer Stromversorgung (106) verbindet; und
einen Prozessor (232), der zur Steuerung des Schalters (222) ausgelegt ist, um selektiv das mindestens eine Ventil (114) mit der Stromversorgung (106) zu verbinden;
**dadurch gekennzeichnet, dass**:
die Bewässerungssteuerung (104) ferner umfasst:
mindestens einen Transmitter (224), der elektrisch mit dem ersten Ventilanschluss (214) verbunden ist, wobei der mindestens eine Transmitter (224) so ausgelegt ist, dass er ein Detektionssignal an das mindestens eine Ventil (114) überträgt; und
mindestens einen Empfänger (228), der elektrisch mit dem zweiten Ventilanschluss (216) verbunden ist, wobei der mindestens eine Empfänger (228) so ausgelegt ist, dass er das Detektionssignal von dem mindestens einen Ventil (114) empfängt; und
der Prozessor (232) elektrisch mit dem mindestens einen Transmitter (224) und dem mindestens einen Empfänger (228) verbunden ist, wobei der Prozessor (232) ferner so ausgelegt ist um:
den Verbindungsstatus des mindestens einen Ventils (114) zu bestimmen, basierend darauf, ob das Detektionssignal von dem mindestens einen Empfänger (228) empfangen wird.

2. Bewässerungssteuerung (104) nach Anspruch 1, wobei das Detektionssignal im Vergleich zu einer Nennspannung der Stromversorgung (106) ein Niedrigspannungssignal ist.

3. Bewässerungssteuerung (104) nach Anspruch 1-2, wobei das Detektionssignal im Vergleich zu einem Frequenzwert der Stromversorgung (106) ein Hochfrequenzsignal ist.

4. Bewässerungssteuerung (104) nach Anspruch 1-3, wobei der Verbindungsstatus des mindestens einen Ventils (114) entweder verbunden oder getrennt ist.

5. Bewässerungssteuerung (104) nach Anspruch 4, wobei der Prozessor (232) so ausgelegt ist, dass er den Verbindungsstatus als verbunden bestimmt, wenn das Detektionssignal von dem Empfänger (228) empfangen wird.

6. Bewässerungssteuerung (104) nach Anspruch 5, wobei der Prozessor (232) so ausgelegt ist, dass er den Schalter (222) so steuert, dass die Stromversorgung (106) mit dem mindestens einen Ventil (114) verbunden ist, wenn der Verbindungsstatus des mindestens einen Ventils (114) verbunden ist.

7. Bewässerungssteuerung (104) nach Anspruch 4, wobei der Prozessor (232) so ausgelegt ist, dass er den Verbindungsstatus als getrennt bestimmt, wenn das Detektionssignal nicht vom Empfänger (228) empfangen wird.

8. Bewässerungssteuerung (104) nach Anspruch 7, wobei der Prozessor (232) so ausgelegt ist, dass er den Schalter (222) so steuert, dass die Stromversorgung (106) nicht mit dem mindestens einen Ventil (114) verbunden ist, wenn der Verbindungsstatus des mindestens einen Ventils (114) nicht verbunden ist.

9. Bewässerungssteuerung (104) nach Anspruch 1-8, ferner umfassend einen ersten Hochpassfilter (226) zwischen dem mindestens einen Transmitter (224) und der Stromversorgung (106).

10. Bewässerungssteuerung (104) nach den Ansprüchen 1-9, ferner umfassend einen zweiten Hochpassfilter (230) zwischen dem mindestens einen Empfänger (228) und der Stromversorgung (106).

11. Bewässerungssteuerung (104) nach den Ansprüchen 1-10, wobei die Anzahl von Empfängern (228) in der Bewässerungssteuerung (104) gleich der Anzahl von Ventilen (114) ist, so dass jedes des mindestens einen Ventils (114) mit einem dedizierten Empfänger (228) verbunden ist, um den Verbindungsstatus des mindestens einen Ventils (114) zu bestimmen.

12. Bewässerungssteuerung (104) nach den Ansprüchen 1-11, ferner umfassend eine Benutzerschnittstelle (118), um es einem Benutzer zu ermöglichen, die Bewässerungssteuerung (104) zu programmieren.

13. Bewässerungssteuerung (104) nach Anspruch 12, wobei die Benutzerschnittstelle (118) Informationen nur über diejenigen Ventile (114) anzeigt, die den Verbindungsstatus verbunden haben.

14. Bewässerungssteuerung (104) nach den Ansprüchen 1-13, ferner umfassend einen Speicher zum Speichern eines Bewässerungssteuerungsprogramms und von Bewässerungssteuerungsparametern, wobei das Bewässerungssteuerungssteuerungsprogramm so ausgelegt ist, dass es zumindest teilweise das Ein- und Ausschalten des Schalters (222) steuert.

15. Bewässerungssteuerung (104) nach den Ansprüchen 1-14, wobei der Schalter (222) ein Wechselstromschalter, wie z.B. ein Triac oder ein Relais oder ein IGBT oder ein Thyristor, ist.

## Revendications

1. Contrôleur d'irrigation (104) pour déterminer un état de connexion d'au moins une vanne (114) dans un système d'irrigation (100), le contrôleur d'irrigation (104) comprenant :
un premier orifice de vanne (214) couplé électriquement avec l'au moins une vanne (114) ;
un deuxième orifice de vanne (216) couplé électriquement avec l'au moins une vanne (114) ;
un commutateur (222) couplé électriquement avec au moins un du premier orifice de vanne (214) et du deuxième orifice de vanne (216), le commutateur (222) configuré pour connecter sélectivement l'au moins une vanne (114) à une alimentation électrique (106) à travers l'au moins un du premier orifice de vanne (214) et du deuxième orifice de vanne (216) ; et
un processeur (232) configuré pour contrôler le commutateur (222) pour connecter sélectivement l'au moins une vanne (114) à l'alimentation électrique (106) ;
**caractérisé en ce que** :
le contrôleur (104) comprend en outre :
au moins un émetteur (224) couplé électriquement avec le premier orifice de vanne (214), dans lequel l'au moins un émetteur (224) est configuré pour transmettre un signal de détection à l'au moins une vanne (114) ; et
au moins un récepteur (228) couplé électriquement avec le deuxième orifice de vanne (216), dans lequel l'au moins un récepteur (228) est configuré pour recevoir le signal de détection de l'au moins une vanne (114) ; et
le processeur (232) couplé électriquement avec l'au moins un émetteur (224) et l'au moins un récepteur (228), le processeur (232) est en outre configuré pour :
déterminer l'état de connexion de l'au moins une vanne (114) selon que le signal de détection est reçu par l'au moins un récepteur (228).

2. Contrôleur d'irrigation (104) selon la revendication 1, dans lequel le signal de détection est un signal à basse tension par rapport à une tension nominale de l'alimentation électrique (106).

3. Contrôleur d'irrigation (104) selon les revendications 1 à 2, dans lequel le signal de détection est un signal à haute tension par rapport à une tension nominale de l'alimentation électrique (106).

4. Contrôleur d'irrigation (104) selon les revendications 1 à 3, dans lequel l'état de connexion de l'au moins une vanne (114) est soit connecté soit déconnecté.

5. Contrôleur d'irrigation (104) selon la revendication 4, dans lequel le processeur (232) est configuré pour déterminer l'état de connexion lorsque le signal de détection est reçu par le récepteur (228).

6. Contrôleur d'irrigation (104) selon la revendication 5, dans lequel le processeur (232) est configuré pour contrôler le commutateur (222) de façon que l'alimentation électrique (106) soit connectée à l'au moins une vanne (114) lorsque l'état de connexion de l'au moins une vanne (114) est connecté.

7. Contrôleur d'irrigation (104) selon la revendication 4, dans lequel le processeur (232) est configuré pour déterminer l'état de connexion comme déconnecté lorsque le signal de détection n'est pas reçu par le récepteur (228).

8. Contrôleur d'irrigation (104) selon la revendication 7, dans lequel le processeur (232) est configuré pour contrôler le commutateur (222) de façon que l'alimentation électrique (106) ne soit pas connectée à l'au moins une vanne (114) lorsque l'état de connexion de l'au moins une vanne (114) est déconnecté.

9. Contrôleur d'irrigation (104) selon les revendications 1 à 8, comprenant en outre un premier filtre passe-haut (226) entre l'au moins un émetteur (224) et l'alimentation électrique (106).

10. Contrôleur d'irrigation (104) selon les revendications 1 à 9, comprenant en outre un deuxième filtre passe-haut (230) entre l'au moins un récepteur (228) et l'alimentation électrique (106).

11. Contrôleur d'irrigation (104) selon les revendications 1 à 10, dans lequel le nombre de récepteurs (228) dans le contrôleur d'irrigation (104) est égal au nombre de vannes (114) de façon que chacune des au moins une vanne (114) soit couplée avec un récepteur dédié (228) pour déterminer l'état de connexion de l'au moins une vanne (114).

12. Contrôleur d'irrigation (104) selon les revendications 1 à 11, comprenant en outre une interface utilisateur (118) pour permettre à un utilisateur de programmer le contrôleur d'irrigation (104).

13. Contrôleur d'irrigation (104) selon la revendication 12, dans lequel l'interface utilisateur (118) affiche des informations concernant uniquement les vannes (114) ayant l'état de connexion comme connecté.

14. Contrôleur d'irrigation (104) selon les revendications 1 à 13, comprenant en outre une mémoire pour stocker un programme de contrôle d'irrigation et des paramètres de contrôle d'irrigation, le programme de contrôle d'irrigation configuré pour contrôler au moins en partie la mise en marche et l'arrêt du commutateur (222).

15. Contrôleur d'irrigation (104) selon les revendications 1 à 14, dans lequel le commutateur (222) est un commutateur AC, tel qu'un triac, ou un relais ou un IGBT ou un thyristor.
